# EUROPÄISCHE PATENTANMELDUNG

(11) **EP 4 656 316 A1**
(43) Veröffentlichungstag der Anmeldung: **03.12.2025**
(21) Anmeldenummer: 24178604.5
(22) Anmeldetag: 28.05.2024
(51) Int. Cl.: B23K 9/04, B23K 10/00, B23K 26/342, B23K 28/02, B23P 6/04, B23P 23/04, B23P 23/06, B23K 103/06

(54) **SCHWEISSANLAGE UND VERFAHREN ZUM HERSTELLEN EINES WERKSTÜCKS**

(71) Anmelder: voestalpine Giesserei Linz GmbH, 4020 Linz (AT)
(72) Erfinder: Aistleitner, Erich, 4020 Linz (AT); Wansch, Markus, 4020 Linz (AT); Matzek, Christian, 4020 Linz (AT); Giritzer, Jürgen, 4020 Linza (AT); Sperl, René, 4020 Linz (AT)
(74) Vertreter: Bratovic, Nino Maria

(57) **Zusammenfassung**

Die Erfindung schafft ein Verfahren sowie eine Schweißanlage zum Herstellen eines Werkstücks. Das Verfahren umfasst die Schritte:
Herstellen (S30) einer Grobversion des Werkstücks (1-i) in einem Stahlgussverfahren;
Ausbilden (S83) mindestens einer Schleifgrube (2-i) in der Grobversion des Werkstücks (1-i);
Automatisches 3-dimensionales Vermessen (S70) der hergestellten Grobversion des Werkstücks (1-i) mit der daran ausgebildeten mindestens einen Schleifgrube (2-i), um Ist-Maßdaten zu erzeugen;
Automatisches Berechnen (S91) von abzufahrenden Bewegungsbahnen eines Roboters (200), welcher ein Schweißwerkzeug (201, 202) führt, basierend auf den erzeugten Ist-Maßdaten sowie auf gespeicherten Soll-Maßdaten für das Werkstück (1-i); und
Automatisches Ausfüllen (S90) der mindestens einen Schleifgrube (2-i) mittels Fertigungsschweißen, wobei der Roboter (200) gemäß den berechneten Bewegungsbahnen gesteuert wird.

## Beschreibung

### Technisches Gebiet

Die vorliegende Erfindung betrifft eine Schweißanlage sowie ein Verfahren zum Herstellen eines Werkstücks, insbesondere eines großformatigen Werkstücks, welches im Wesentlichen in einem Gussverfahren wie etwa einem Stahlgussverfahren hergestellt wird.

### Technischer Hintergrund

Großformatige Bauteile, die besonders hohen Belastungen widerstehen müssen, werden häufig unter Verwendung von Gussverfahren hergestellt, insbesondere von Stahlgussverfahren. Dabei wird zunächst eine Grobversion des Werkstücks in dem Gussverfahren erzeugt, welche danach unterschiedlichen Nachbearbeitungsschritten unterworfen wird. Die Nachbearbeitung ist komplex und führt insbesondere bei großformatigen Bauteilen spezifische Herausforderungen mit sich.

Bekannt ist beispielsweise das Abtragen von überschüssigem Material in Maßabweichungen eines Werkstücks durch Kohlelichtbogen-Fugenhobeln. Dabei handelt es sich um einen thermischen Prozess, in welchem ein verkupferter Kohlestab als Verbrauchselektrode verwendet wird. Durch einen zwischen der Verbrauchselektrode und dem überschüssigen Material ausgebildeten Lichtbogen wird das Material geschmolzen und danach typischerweise mit Druckluft weggeblasen. Dieses Verfahren bringt allerdings einige Begleiteffekte mit sich, beispielsweise eine unerwünschte Veränderung der Materialzusammensetzung an den bearbeiteten Stellen ("Aufkohlen" der Oberfläche), aber auch erhebliche Rauch- und Lärmemissionen sowie eine erhebliche Hitzeentwicklung.

Weiterhin bestehen Herausforderungen insbesondere im Zusammenhang mit elektromagnetischen Feldern und Störwirkungen, die bei allen Anwendungen mit hohen elektrischen Strömen auftreten, aber bei langen Wegstrecken im Zusammenhang mit großformatigen Bauteilen besonders stark ins Gewicht fallen.

### Zusammenfassung der Erfindung

Es ist eine Aufgabe der vorliegenden Erfindung, eine verbesserte Schweißanlage sowie ein verbessertes Verfahren zum Herstellen eines Werkstücks, insbesondere jeweils zum Herstellen von großformatigen Werkstücken unter Verwendung von Stahlgussverfahren, bereitzustellen.

Gemäß einem ersten Aspekt der vorliegenden Erfindung wird demnach ein Verfahren zum Herstellen eines Werkstücks bereitgestellt, umfassend zumindest die Schritte:
Herstellen einer Grobversion des Werkstücks in einem Stahlgussverfahren;
Ausbilden mindestens einer Schleifgrube in der Grobversion des Werkstücks;
Automatisches 3-dimensionales Vermessen der hergestellten Grobversion des Werkstücks mit der daran ausgebildeten mindestens einen Schleifgrube, um Ist-Maßdaten zu erzeugen;
Automatisches Berechnen von abzufahrenden Bewegungsbahnen eines Roboters, welcher ein Schweißwerkzeug führt, basierend auf den erzeugten Ist-Maßdaten sowie auf gespeicherten Soll-Maßdaten für das Werkstück; und
Automatisches Ausfüllen der mindestens einen Schleifgrube mittels Fertigungsschweißen, wobei der Roboter gemäß den berechneten Bewegungsbahnen gesteuert wird.

Unter einer "Grobversion" des Werkstücks ist insbesondere ein Zwischenzustand des Werkstücks vor seiner endgültigen Fertigstellung zu verstehen, insbesondere ein Zwischenzustand als direktes Resultat eines Stahlgusses oder als Resultat eines einem Stahlguss nachgelagerten Bearbeitungsprozesses, wobei in der Grobversion des Werkstücks zeitweise mindestens eine, für gewöhnliche jedoch mehrere Ungänzen vorhanden sind. Bei der mindestens einen Ungänze kann es sich insbesondere um einen Materialfehler wie etwa einen Riss, einen Einschluss, eine Pore, einen Lunker, eine Dopplung oder eine andere Diskontinuität im Gefüge handeln.

Solche beim Guss entstehenden Ungänzen werden typischerweise mittels thermischer Schneidprozesse (z.B. mit Kohlelichtbögen) schnell und effizient aus der Grobversion entfernt. Hierdurch entstehen mitunter beträchtliche Fehlstellen in der Grobversion im Vergleich zu den gewünschten Endzustand des Werkstücks, die es wieder aufzufüllen gilt. Darüber hinaus kann durch den thermischen Schneidprozess eine unerwünschte Materialveränderung an den Rändern der Fehlstelle entstehen, beispielsweise eine Aufkohlung (d.h. eine Anreicherung mit Kohlenstoff) im Falle der Bearbeitung mit Kohlelichtbögen.

Um nach dem Ausmerzen der Ungänzen eine passende Basis für das notwendige Ausfüllen dieser Fehlstellen zu erhalten, werden vorteilhaft die Schleifgruben, insbesondere mit definierten Abmessungen, durch weiteres Abschleifen der Fehlstellen erzeugt. Bei solchen Schleifgruben handelt es sich somit um Ausnehmungen in der Grobversion des Werkstücks, welche an Stellen angeordnet sind, an denen zuvor Ungänzen in der Grobversion des Werkstücks festgestellt und entfernt wurden.

Nach dem Erzeugen der Schleifgruben liegen somit vorteilhaft keine Ungänzen und keine Materialveränderungen an der Grobversion des Werkstücks vor, sondern nur noch reine Fehlstellen in Form der Schleifgruben.

Wie später noch erläutert werden wird, können daraufhin für diese Schleifgruben vorbestimmte Parametersätze gespeichert und verwendet werden, um ein besonders gut angepasstes Fertigungsschweißen zum Ausfüllen der Schweißgruben zu ermöglichen.

Generell wird in der vorliegenden Beschreibung mitunter von "Versionen" des Werkstücks gesprochen. Darunter soll verstanden werden, dass ein und dasselbe Werkstück im Zuge seiner Herstellung verschiedene Versionen (oder: Zwischenzustände) durchläuft, ohne dass es sich deswegen um ein anderes Werkstück handelt.

Ist-Maßdaten des Werkstücks können sich dabei insbesondere auf eine aktuelle Gestalt des Werkstücks beziehen, im Gegensatz zu Soll-Maßdaten, welche eine zukünftig zu erreichende Gestalt des Werkstücks beschreiben können, vor allem eine gewünschte Endversion des fertig hergestellten Werkstücks. Es versteht sich, dass im Laufe des Herstellungsverfahrens des Werkstücks auch mehrfach Ist-Maßdaten erzeugt werden können, jeweils entsprechend der zu diesem Zeitpunkt bestehenden Gestalt des Werkstücks. Die Maßdaten (sowohl die Ist-Maßdaten als auch die Soll-Maßdaten) beschreiben insbesondere eine 3-dimensionale Außenhülle des Werkstücks.

Durch das nachfolgende Fertigungsschweißen wird vorteilhaft jede Schleifgrube derart bearbeitet, insbesondere ausgefüllt, dass das Werkstück an der Stelle, an der zunächst die Ungänze und dann die Schleifgrube vorlagen, danach entweder fertiggestellt ist, oder sich einem Zustand befindet, in welchem nachfolgende Prozesse durchgeführt werden können, die an Stellen ohne ursprüngliche Ungänzen unmittelbar durchgeführt werden konnten. Mit anderen Worten kann durch das Ausmerzen der mindestens einen Ungänze sowie das danach folgende automatische Ausfüllen der mindestens einen Schleifgrube die Grobversion des Werkstücks in einen einheitlichen Zustand versetzt werden, in welchem ein nachfolgender Prozessschritt (vorzugsweise ohne weitere Berücksichtigung der früheren mindestens einen Ungänze) an dem Werkstück durchgeführt werden kann.

Die für das Fertigungsschweißen berechneten und beim automatischen Ausfüllen der Schleifgruben auch verwendeten Bewegungsbahnen können auch als Fertigungsschweißen-Bewegungsbahnen bezeichnet werden, insbesondere um sie von anderen möglichen Bewegungsbahnen klarer abzugrenzen.

Gemäß einigen bevorzugten Ausführungsformen, Varianten oder Verfeinerungen von Ausführungsformen wird als Schweißwerkzeug für das Fertigungsschweißen ein Metallschutzgasschweißwerkzeug verwendet.

Gemäß einigen bevorzugten Ausführungsformen, Varianten oder Verfeinerungen von Ausführungsformen umfasst das Verfahren ferner ein automatisches Auftragschweißen des Werkstücks zur Beschichtung oder Konturbildung, insbesondere mittels Laserschweißen (d.h., mittels Laser-Auftragschweißen) oder mittels Plasma-Pulver-Auftragschweißen.

Gemäß einigen bevorzugten Ausführungsformen, Varianten oder Verfeinerungen von Ausführungsformen umfasst das Verfahren ferner ein automatisches Berechnen von abzufahrenden Plasmafugen-Bewegungsbahnen eines Plasmabrenners zum Abtragen von Übermaßen an der Grobversion des Werkstücks mittels Plasmafugen, basierend auf den erzeugten Ist-Maßdaten sowie auf den gespeicherten Soll-Maßdaten.

In einem weiteren Schritt kann ein Abtragen der Übermaße durch Plasmafugen mittels des Plasmabrenners erfolgen, wobei der Plasmabrenner dabei entlang der automatisch berechneten Plasmafugen-Bewegungsbahnen bewegt wird.

Auf diese Weise können in der Grobversion ursprünglich vorhandene Übermaße, aber auch in einem dazwischenliegenden Prozessschritt (z.B. bei dem Ausfüllen der Schleifgruben mittels Fertigungsschweißen) entstandene Übermaße (z.B. überstehende Abschnitte von Schweißraupen) entfernt werden, damit die Maße des Werkstücks sich weiter (oder vollständig) den gewünschten Soll-Maßdaten annähern.

Bei dem Plasmafugen erfolgt der Materialabtrag vorteilhaft berührungslos und, beispielsweise im Vergleich zu Prozessen aus dem Stand der Technik wie etwa Lichtbogen-Fugenhobeln, nahezu verschleißfrei. Der Plasmabrenner ist dementsprechend kontinuierlich einsatzfähig, was die Effizienz des Verfahrens verbessert, und bewirkt auch keine Veränderung der Materialzusammensetzung.

Gemäß einigen bevorzugten Ausführungsformen, Varianten oder Verfeinerungen von Ausführungsformen ist der Plasmabrenner über einen linearen Aktuator an dem Roboter angebracht. Es kann eine Abstandsregelung des Plasmabrenners zu dem Werkstück implementiert sein, um den Energieeintrag zeitlich konstant zu halten, wodurch die Prozessstabilität und die Prozesssicherheit verbessert werden können.

Die Abstandsregelung des Plasmabrenners zu dem Werkstück wird bevorzugt unter Verwendung des linearen Aktuators implementiert. Der lineare Aktuator ist vorzugsweise dynamischer als der Roboter, welcher häufig aufgrund seiner größeren Masse nicht dazu in der Lage ist, in ausreichender Schnelligkeit auf die sich ändernden physikalischen Bedingungen am Lichtbogen zu reagieren. Ein linearer Aktuator mit servo-getriebener Linearachse kann demgegenüber deutlich schneller reagieren, um die entsprechende Abstandsregelung durchzuführen. Der lineare Aktuator kann insbesondere (im Zusammenspiel mit dem Plasmabrenner selbst) derart gesteuert werden, dass die Plasmalichtbogenspannung und somit der Energieeintrag auf einem konstanten (vorbestimmten und/oder einstellbaren) Wert gehalten wird.

Gemäß einigen bevorzugten Ausführungsformen, Varianten oder Verfeinerungen von Ausführungsformen umfasst das Verfahren außerdem die Schritte:
Erzeugen eines Plasma-Lichtbogens durch den Plasmabrenner zum Plasmafugen des Werkstücks;
Erfassen einer Plasma-Lichtbogenspannung des erzeugten Plasma-Lichtbogens; und
Regeln des Abstands des Plasmabrenners von dem Werkstück unter Verwendung der erfassten Plasma-Lichtbogenspannung als Regelgröße.

Gemäß einigen bevorzugten Ausführungsformen, Varianten oder Verfeinerungen von Ausführungsformen werden die durch den Plasmabrenner abzufahrenden Plasmafugen-Bewegungsbahnen durch den Roboter realisiert. Der Roboter kann den Plasmabrenner zusätzlich zu einem Fertigungs-Schweißwerkzeug (oder mindestens einem anderen Metallbearbeitungswerkzeug, insbesondere Schweißwerkzeug) führen, oder das Fertigung-Schweißwerkzeug (oder mindestens ein anderes Metallbearbeitungswerkzeug, insbesondere Schweißwerkzeug) und den Plasmabrenner abwechselnd führen.

Gemäß einigen bevorzugten Ausführungsformen, Varianten oder Verfeinerungen von Ausführungsformen umfasst das Verfahren weiterhin die Schritte:
Automatisches 3-dimensionales Vermessen der hergestellten Grobversion des Werkstücks, um vorläufige Ist-Maßdaten zu erzeugen; und
Automatisches Berechnen von abzufahrenden Schleif-Bewegungsbahnen mindestens eines Schleifwerkzeugs, basierend auf den erzeugten vorläufigen Ist-Maßdaten sowie auf den gespeicherten Soll-Maßdaten für das Werkstück;
wobei das Ausbilden der mindestens einen Schleifgrube in der Grobversion des Werkstücks durch Abfahren der abzufahrenden Schleif-Bewegungsbahnen durch das mindestens eine Schleifwerkzeug erfolgt.

Somit kann mindestens eine Schleifgrube automatisch hergestellt werden, und zwar gemäß spezifischen Schleif-Bewegungsbahnen, was insbesondere das nachfolgende Ausfüllen der mindestens einen Schleifgrube mittels Fertigungsschweißen vereinfachen kann.

Wie bereits erläutert wurde, werden Ungänzen vorteilhaft mittels eines thermischen Schneidprozesses, insbesondere unter Verwendung eines Kohlelichtbogens (so genanntes "Kohlelichtbogen-Fugenhobeln") entfernt, wodurch Fehlstellen entstehen, die danach zu den Schleifgruben weiter ausgeschliffen werden.

Gemäß einigen bevorzugten Ausführungsformen, Varianten oder Verfeinerungen von Ausführungsformen umfasst das Verfahren somit weiterhin die Schritte:
Automatisches Berechnen von abzufahrenden Schneid-Bewegungsbahnen mindestens eines thermischen Schneidwerkzeugs, basierend auf zuvor erzeugten Ist-Maßdaten des Werkstücks sowie auf den gespeicherten Soll-Maßdaten für das Werkstück; und
Automatisches Ausmerzen von Ungänzen durch Abfahren der abzufahrenden Schneid-Bewegungsbahnen durch das mindestens eine thermische Schneidwerkzeug.

Gemäß einigen bevorzugten Ausführungsformen, Varianten oder Verfeinerungen von Ausführungsformen werden durch eine Datenbank Schweißparameter bereitgestellt, wobei für mindestens zwei unterschiedliche Lagen der auszufüllenden Schleifgruben im Raum jeweils ein eigener Parametersatz von Schweißparametern bereitgestellt wird. Das Fertigungsschweißen durch das Schweißwerkzeug kann dann unter Verwendung des jeweils zugehörigen Parametersatzes basierend auf der Lage der jeweils auszufüllenden Schleifgrube im Raum erfolgen.

Durch die Gesamtheit der Parametersätze werden vorteilhaft Schweißparameter für alle technisch machbaren möglichen Lagen von Schleifgruben im Raum bereitgestellt. Beispielsweise können drei verschiedene Parametersätze bereitgestellt werden: einer für Lagen nahe an der Horizontalen, einer für Lagen nahe am Lotrechten, und einer für den Übergangsbereich dazwischen. Es können auch nur zwei verschiedene Parametersätze bereitgestellt werden, die beispielsweise jeweils die Hälfte der möglichen Lagen abdecken. Gemäß einem zweiten Aspekt der vorliegenden Erfindung wird außerdem eine Schweißanlage zum Herstellen eines Werkstücks bereitgestellt, umfassend:
mindestens eine Schweißzelle;
eine 3D-Vermessungeinrichtung, welche dazu eingerichtet ist, eine in der Schweißzelle angeordnete Grobversion eines Werkstücks mit mindestens einer daran ausgebildeten Schleifgrube automatisch 3-dimensional zu vermessen, um Ist-Maßdaten zu erzeugen;
mindestens einen Roboter, welcher dazu eingerichtet ist, zumindest ein Schweißwerkzeug zu führen;
eine Datenbank, welche dazu eingerichtet ist, Soll-Maßdaten für das Werkstück zu speichern;
eine Recheneinrichtung, welche dazu eingerichtet ist, automatisch abzufahrende Bewegungsbahnen des das Schweißwerkzeug führenden Roboters basierend auf den erzeugten Ist-Maßdaten sowie auf den gespeicherten Soll-Maßdaten für das Werkstück zu berechnen; und
eine Steuereinrichtung, welche dazu eingerichtet ist, das Schweißwerkzeug und den Roboter unter Verwendung der berechneten Bewegungsbahnen zu steuern, die mindestens eine Schleifgrube mittels Fertigungsschweißen auszufüllen.

Die Recheneinrichtung die Steuereinrichtung können ineinander integriert sein, oder separat voneinander ausgebildet sein. Eine Unterscheidung wird vorliegend insbesondere anhand der Funktionen durchgeführt. Eine solche Recheneinrichtung und/oder Steuereinrichtung kann als eine beliebige Vorrichtung realisiert sein oder werden, welche zum Rechnen, und insbesondere zum Ausführen einer Software, einer App, oder eines Algorithmus in der Lage ist. Die Recheneinrichtung und/oder Steuereinrichtung kann beispielsweise mindestens eine Prozessoreinheit aufweisen, z. B. eine Zentralprozessoreinheit (CPU) und/oder eine Graphikprozessoreinheit (GPU) und/oder eine Feld-programmierbare Logikschaltung (FPGA) und/oder eine anwendungsspezifische integrierte Schaltung (ASIC) und/oder eine Kombination davon. Die Recheneinrichtung und/oder Steuereinrichtung kann außerdem einen Arbeitsspeicher aufweisen, welcher mit der mindestens einen Prozessoreinheit operativ gekoppelt ist, sowie einen nicht-flüchtigen Speicher, welcher mit der mindestens einen Prozessoreinheit und dem Arbeitsspeicher operativ gekoppelt ist. Die Recheneinrichtung und/oder Steuereinrichtung kann ganz oder vollständig in einem lokalen Gerät (z.B. in der Schweißzelle) und/oder ganz oder vollständig in einem entfernten System implementiert sein wie etwa in einem entfernt angeordneten Server und/oder einer Cloud-Computing-Plattform.

Die Schweißanlage kann vorzugsweise mehrere Schweißzellen umfassen, von denen insbesondere jede dazu eingerichtet ist, dass darin ein einzelnes Werkstück (bevorzugt ein großformatiges Werkstück) hergestellt (oder: fertiggestellt) wird oder werden kann. Die Schweißanlage kann über mehrere Roboter verfügen, wobei mindestens ein Roboter dazu eingerichtet ist, in mehr als einer Schweißzelle schweißen zu können. Auf diese Weise können die vorhandenen Roboter effizienter genutzt werden. Es ist auch möglich, dass mindestens eine Schweißzelle und mindestens zwei Roboter derart ausgebildet sind, dass die mindestens zwei Roboter gleichzeitig in der mindestens einen Schweißzelle schweißen können.

Zwischen zwei (oder mehr) Schweißzellen kann auch eine bewegliche Trennwand vorgesehen sein, sodass bei Bedarf zwei (oder mehr) Schweißzellen zu einer großen Schweißzelle zusammengefasst werden können. In diesem Fall können alle Roboter, die zuvor zur Bearbeitung eines Werkstücks in einer der Schweißzellen eingerichtet waren, nun für die Bearbeitung eines (oder mehrerer) Werkstücke in der zusammengefassten Schweißzelle eingerichtet sein.

Die Schweißzellen der Schweißanlage können hintereinander angeordnet sein, wobei für je zwei benachbarte Schweißzellen ein Roboter vorgesehen ist. Die Roboter können überlappend vorgesehen sein, so dass in jeder Schweißzelle außer der ersten und der letzten je zwei Roboter schweißen können und die Schweißanlage somit bei N Schweißzellen N-1 Roboter aufweist und somit maximal N-1 Werkstücke gleichzeitig durch Roboter bearbeitet, z.B. geschweißt werden können. Alternativ können die Roboter auch nicht-überlappend vorgesehen sein, sodass in je zwei Schweißzellen ausschließlich ein bestimmter Roboter (und dieser auch nur dort) arbeiten bzw. schweißen kann, sodass die Schweißanlage bei N Schweißzellen N/2 Roboter aufweist und somit maximal N/2 Werkstücke gleichzeitig bearbeitet, insbesondere geschweißt, werden können.

Auch Mischformen oder andere Anordnungen von Schweißzellen sowie andere Anzahlen von Robotern in der Schweißanlage sind möglich.

Gemäß einigen bevorzugten Ausführungsformen, Varianten oder Verfeinerungen von Ausführungsformen umfasst die Schweißanlage ferner einen Plasmabrenner zum Abtragen von Übermaßen an der Grobversion des Werkstücks mittels Plasmafugen. Die Steuereinrichtung kann dazu eingerichtet sein, den Plasmabrenner zu steuern, wie dies im Vorangehenden mit Bezug auf das Verfahren gemäß dem ersten Aspekt der vorliegenden Erfindung beschrieben wurde. Insbesondere kann die Steuereinrichtung dazu eingerichtet sein, den Plasmabrenner basierend auf den erzeugten Ist-Maßdaten sowie auf den gespeicherten Soll-Maßdaten zu steuern. Auf diese Weise sind die Maße der aktuellen Version des Werkstücks nach dem Durchführen des Plasmafugens vorteilhaft näher an den Soll-Maßdaten (oder: diesen ähnlicher) als vor dem Durchführen des Plasmafugens.

Gemäß einigen bevorzugten Ausführungsformen, Varianten oder Verfeinerungen von Ausführungsformen ist der Plasmabrenner über einen linearen Aktuator an dem Roboter anbringbar oder angebracht. Die Steuereinrichtung kann dazu eingerichtet sein, eine Abstandsregelung des Plasmabrenners zu dem Werkstück unter Verwendung des linearen Aktuators zu implementieren. Dabei kann, wie im Vorangehenden bereits erläutert wurde, die Plasma-Lichtbogenspannung von der Steuereinrichtung als Regelgröße für die Abstandsregelung verwendet werden. Die Steuereinrichtung kann hierzu über ein Plasma-Lichtbogenspannungs-Bestimmungsmodul verfügen, welches dazu eingerichtet ist, die aktuelle Plasma-Lichtbogenspannung zu bestimmen.

Wenn hierin von "Modulen" die Rede ist, versteht es sich, dass dies nicht notwendiger Weise bedeutet, dass solche Module als separate Einheiten getrennt voneinander ausgebildet sind.

In Fällen, in denen Module als Software ausgebildet sind können die Module als Programmcode-Abschnitte oder Programmcode-Bestandteile realisiert sein, welche voneinander unterscheidbar sein können, aber welche auch ineinander verwoben sein können. Ebenso gilt, dass in Fällen, in denen ein oder mehrere Module als Hardware realisiert sind, die Funktionen eines oder mehrerer Module durch eine und dieselbe Hardware-Komponente realisiert sein können. Alternativ oder zusätzlich können verschiedene Funktionen eines einzelnen Moduls, oder auch verschiedene Funktionen verschiedener Module, auf ein oder mehreren separaten Hardware-Komponenten realisiert werden, die mit den Modulen somit nicht notwendiger Weise in einem Eins-zu-Eins-Verhältnis stehen müssen. In diesem Sinne kann jede Vorrichtung, jedes System, jedes Verfahren etc. welches alle Eigenschaften und Funktionen aufweist, welche einem bestimmen Modul zugeschrieben werden, so verstanden werden, dass sie ein solches Modul aufweist, darstellt, oder implementiert. Insbesondere kann es möglich sein, dass sämtliche Module als Programmcode realisiert sind, welcher von der Recheneinrichtung und/oder Steuereinrichtung ausgeführt wird.

Gemäß einigen bevorzugten Ausführungsformen, Varianten oder Verfeinerungen von Ausführungsformen umfasst die Schweißanlage außerdem ein Auftragschweißwerkzeug, insbesondere ein Laser-Auftragschweißwerkzeug oder ein Plasma-Pulver-Auftragschweißwerkzeug, welches an dem Roboter angebracht oder anbringbar ist. Hierdurch kann ein Auftragschweißen durchgeführt werden, um die aktuelle Version des Werkstücks näher an die fertiggestellte Version des Werkstücks heranzuführen.

Dass ein Werkzeug an dem Roboter anbringbar ist, kann insbesondere bedeuten, dass der Roboter das entsprechende Werkzeug greifen oder an sich befestigen kann, oder dass durch eine automatisierte Werkzeughalterung das Werkzeug an dem Roboter angebracht werden kann.

Gemäß einigen bevorzugten Ausführungsformen, Varianten oder Verfeinerungen von Ausführungsformen umfasst die Schweißanlage außerdem eine Stromschiene,
wobei der Roboter einen Stromabnehmer mit einem Schleifkontakt aufweist, welcher dazu eingerichtet ist, während Bewegungen des Roboters mit der Stromschiene in elektrischem Kontakt zu bleiben, um über die Stromschiene eine elektrische Verbindung zwischen einem elektrischen Pol des Roboters und dem Werkstück herzustellen, insbesondere eine Masseverbindung.

Durch die Verwendung der Stromschiene kann die Gesamtlänge eines effektiven Strompfads zwischen dem elektrischen Pol des Roboters (genauer: einer Schweißstromquelle des Roboters) und dem Werkstück deutlich verkürzt werden, wodurch elektromagnetische Störeinflüsse (z.B. eine Blaswirkung), insbesondere verursacht oder verstärkt durch die großen Dimensionen des herzustellenden Werkstücks sowie der geometrischen Anordnungen der elektrischen Stromleitungen, verringert oder vollständig vermieden werden können.

Dieser Vorteil ergibt sich somit insbesondere bei Schweißzellen, welche für großformatige Werkstücke ausgelegt sind, wobei großformatige Werkstücke insbesondere Werkstücke mit Abmessungen von 3m*3m*3m oder (in irgendeiner Dimension) größer oder mit gleichem oder größerem Volumen sind, besonders bevorzugt mit Abmessungen von 4m*4m*4m oder (in irgendeiner Dimension) größer oder mit gleichem oder größerem Volumen sind, beispielsweise Werkstücke mit Abmessungen von 4m*4m*8m oder (in irgendeiner Dimension) größer oder mit gleichem oder größerem Volumen.

Großformatige Werkstücke können auch solche sein, welche in der Grobversion (insbesondere unmittelbar) nach dem Stahlguss ein Gewicht von 10 Tonnen oder mehr aufweisen, beispielsweise von 30 Tonnen oder mehr, 50 Tonnen oder mehr, 100 Tonnen oder mehr, 150 Tonnen oder mehr, oder sogar 200 Tonnen oder mehr.

Durch die Verwendung der erfindungsgemäßen Stromschiene kann eine Induktivität des Strompfades vorteilhaft gering gehalten werden, beispielsweise unter 30 Mikrohenry (µH), unter 29 Mikrohenry (µH), unter 25 Mikrohenry (µH) oder, besonders bevorzugt, unter 20 Mikrohenry (µH).

Gemäß einigen bevorzugten Ausführungsformen, Varianten oder Verfeinerungen von Ausführungsformen ist das Werkstück in der Schweißzelle mittels einer Masseleitung elektrisch mit der Stromschiene verbunden oder verbindbar.

Eine kombinierte stromführende Länge der Masseleitung und der Stromschiene beträgt bevorzugt 12 Meter oder weniger, insbesondere 10 Meter oder weniger, besonders bevorzugt unter 8 Metern. Gleichzeitig weist die Stromschiene aufgrund der benötigten Größe der Schweißzelle für großformatige Werkstücke typischerweise eine Länge von 3 m oder mehr, insbesondere 4 m oder mehr, auf.

Insbesondere wenn die Schweißanlage mehrere Schweißzellen aufweist, die hintereinander angeordnet sind (insbesondere in einer geraden Linie), kann die Stromschiene über mehrere Schweißzellen hinweg ausgebildet werden. Während die Stromschiene selbst dabei deutlich länger werden kann, bleibt die kombinierte stromführende Länge der Stromschiene und der jeweiligen Masseleitung (d.h. der effektive Strompfad) für die jeweilige Schweißzelle dabei vorteilhaft weiterhin unter 12 Metern, insbesondere unter 10 Metern, bevorzugt unter 8 Metern. Die Stromschiene, und damit typischerweise auch eine Bewegungsbahn des Roboters, kann auch einen Biegungsradius aufweisen.

Gemäß einigen bevorzugten Ausführungsformen, Varianten oder Verfeinerungen von Ausführungsformen weist der Schleifkontakt Schleifkohle, Grauguss, Messing, Bronze, Aluminium und/oder Kupfer auf oder besteht daraus. Der Schleifkontakt kann beispielsweise vorteilhaft aus einer Messing/Bronze-Legierung oder einer Aluminium/Kupfer-Legierung bestehen oder eine solche Legierung aufweisen.

Ein oder mehrere Materialien (insbesondere alle Materialien) aus denen der Schleifkontakt besteht, weisen vorteilhaft eine elektrische Leitfähigkeit von 5 Siemens pro Meter (S/m) oder mehr, bevorzugt von 13 S/m oder mehr, besonders bevorzugt von 28 S/m oder mehr, insbesondere von 33 S/m oder mehr oder 55 S/m oder mehr auf.

Die Schweißanlage kann vorteilhaft außerdem eine Datenbank aufweisen, welche Betriebsparameter für mindestens einen Prozess bereitstellt, beispielsweise Schweißparameter für das Fertigungsschweißen. Vorteilhaft werden für mindestens zwei unterschiedliche Lagen der auszufüllenden Schleifgruben im Raum jeweils ein eigener Parametersatz von Schweißparametern bereitgestellt. Die Schweißanlage kann vorteilhaft derart eingerichtet sein, dass das Fertigungsschweißen durch das Schweißwerkzeug unter Verwendung des jeweils zugehörigen Parametersatzes basierend auf der Lage der jeweils auszufüllenden Schleifgrube im Raum erfolgt.

Weitere vorteilhafte Ausführungsformen, Varianten, und Verfeinerungen von Ausführungsformen ergeben sich aus der nachfolgenden detaillierten Beschreibung unter Bezugnahme auf die Figuren.

### Kurze Beschreibung der Figuren

Die Erfindung wird nachstehend anhand von Ausführungsbeispielen in den Figuren der Zeichnungen näher erläutert. Es zeigen hierbei:
- Fig. 1: eine Schweißanlage gemäß einer Ausführungsform der vorliegenden Erfindung;
- Fig. 2: eine schematische 3-dimensionale Detailansicht eines Teils einer Stromschiene der Schweißanlage aus Fig. 1;
- Fig. 3: einen schematischen Querschnitt durch die Stromschiene aus Fig. 2;
- Fig. 4: eine schematische elektrische Anordnung in einer Schweißzelle nach dem Stand der Technik;
- Fig. 5: eine schematische elektrische Anordnung einer Schweißzelle einer Schweißanlage gemäß einer Ausführungsform der vorliegenden Erfindung;
- Fig. 6: eine schematische Detailansicht eines Roboters der Schweißanlage aus Fig. 1;
- Fig. 7: verschiedene Ansichten von Schleifgruben;
- Fig. 8: eine schematische Darstellung zur Illustration möglicher geometrischer Formen von Schleifgruben;
- Fig. 9: ein schematisches Flussdiagramm zum Erläutern eines Verfahrens gemäß einer Ausführungsform der vorliegenden Erfindung.

In sämtlichen Figuren sind gleiche bzw. funktionsgleiche Elemente und Vorrichtungen - sofern nicht anders angegeben ist - mit denselben Bezugszeichen versehen worden. Die Bezeichnung und Nummerierung der Verfahrensschritte impliziert nicht zwangsläufig eine Reihenfolge, sondern dient der besseren Unterscheidung, obwohl in einigen Varianten die Reihenfolge auch der Reihenfolge der Nummerierung entsprechen kann.

### Detaillierte Beschreibung der Figuren

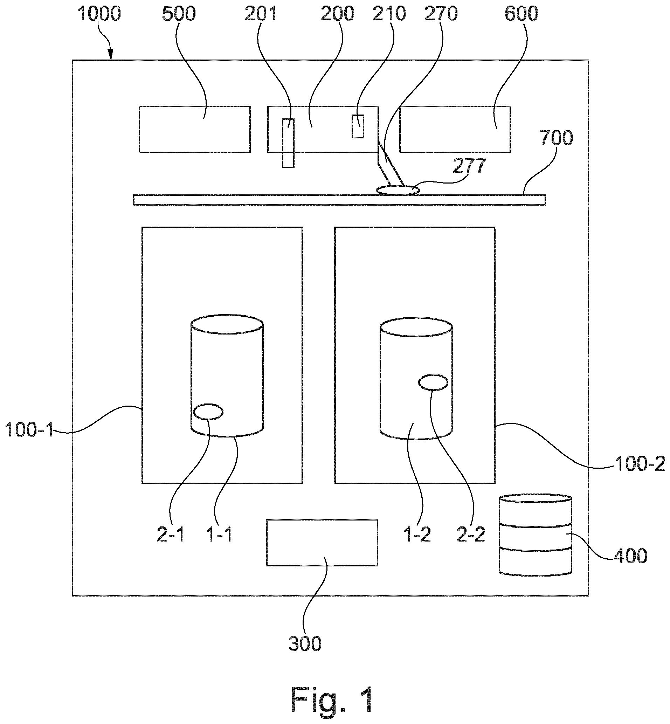

Fig. 1 zeigt eine Schweißanlage 1000 gemäß einer Ausführungsform der vorliegenden Erfindung. Die Schweißanlage 1000 umfasst mindestens eine Schweißzelle, wobei in Fig. 1 beispielhaft zwei Schweißzellen 100-1, 100-2 dargestellt sind. Die Schweißanlage 1000 kann auch nur eine Schweißzelle 100-1, oder mehr als zwei Schweißzellen 100-1, 100-2 aufweisen. Eine Schweißzelle einer beliebigen Anzahl von Schweißzellen wird im Folgenden auch als "Schweißzelle 100-i" bezeichnet. Dieselbe Nomenklatur wird im Folgenden auch für weitere Elemente verwendet, von denen es mehr als eines geben kann.

Die Schweißanlage 1000 umfasst außerdem mindestens einen Roboter 200, welcher dazu eingerichtet ist, zumindest ein Schweißwerkzeug zu führen. In Fig. 1 ist beispielhaft ein einzelner Roboter 200 dargestellt, welcher dazu eingerichtet ist, das Schweißwerkzeug sowohl in der ersten Schweißzelle 100-1 als auch in der zweiten Schweißzelle 100-2 einsetzen zu können. Mit anderen Worten kann der Roboter 200 sowohl ein erstes Werkstück 1-1 in der ersten Schweißzelle 100-1 als auch (zeitlich davor und/oder danach) ein zweites Werkstück 1-2 in der zweiten Schweißzelle 100-2 bearbeiten.

Da typischerweise das Schweißen (also das Bearbeiten eines Werkstücks 1-i mit dem Schweißwerkzeug) nur einen Teil der in der Schweißzelle 100-i auszuführenden Verfahrensschritte ausmacht, und nicht für jeden der Verfahrensschritte der Roboter 200 gebraucht wird, kann der Roboter 200 auf diese Weise besonders umfassend ausgenutzt werden, indem er, wenn er in einer der Schweißzellen 100-i gerade nicht benötigt wird, in einer anderen ihm zugänglichen Schweißzelle 100-j (wobei "100-j" hier für eine andere Schweißzelle als die Schweißzelle "100-i" steht) eingesetzt werden kann.

Wie im Vorangehenden bereits erläutert wurde, kann die Schweißanlage 1000 auch einen Roboter 200 für jede Schweißzelle 100-i aufweisen, einen Roboter pro zwei Schweißzellen 100-i (entweder überlappend oder nichtüberlappen), oder eine andere Anzahl von Robotern 200 aufweisen. Es kann auch vorgesehen sein, dass pro Schweißzelle 100-i mehr als ein Roboter 200 vorgesehen ist, entweder dediziert (also nur für diese Schweißzelle 100-i) oder im Durchschnitt.

Wie im Folgenden noch näher erläutert werden wird, kann der Roboter 200 nämlich für eine Vielzahl von Verfahrensschritten für die Herstellung des Werkstücks 1-i eingesetzt werden, wofür teilweise unterschiedliche Werkzeuge benötigt werden. Dabei kann vorgesehen sein, dass ein Roboter 200 mit mehreren Werkzeugen bestückt ist und/oder zwischen mehreren Werkzeugen wechseln kann und/oder verschiedene Roboter 200 mit jeweils (ganz oder teilweise) verschiedenen Werkzeugen vorgesehen sind. Hierfür kann die Schweißanlage 1000 beispielsweise eine für den Roboter 200 zugängliche Werkzeughalterung mit einer Mehrzahl von durch den Roboter 200 verwendbaren Werkzeugen aufweisen.

Bei dem Schweißwerkzeug kann es sich insbesondere um ein Schweißwerkzeug für das Fertigungsschweißen handeln, welches deswegen auch als Fertigungs-Schweißwerkzeug 201 bezeichenbar ist. Ein solches Fertigungs-Schweißwerkzeug 201 kann beispielsweise ein Metallschutzgasschweißwerkzeug sein.

Der Roboter 200 kann außerdem dazu eingerichtet sein, einen Plasmabrenner zu führen, beispielweise zum Abtragen von Übermaßen. Der Roboter 200 kann weiterhin zum Führen eines Auftragschweißwerkzeugs eingerichtet sein, insbesondere eines Laser-Auftragschweißwerkzeugs und/oder eines Plasma-Pulver-Auftragschweißwerkzeugs. Der Roboter 200 kann auch zum Führen eines Schleifwerkzeugs eingerichtet sein. Diese und weitere Werkzeuge und deren Anwendungsmöglichkeiten werden im Folgenden, auch im Zusammenhang mit dem erfindungsgemäßen Verfahren, noch näher erläutert werden.

Die Schweißanlage 1000 weist außerdem eine 3D-Vermessungseinrichtung 300 auf, welche dazu eingerichtet ist, eine in der Schweißzelle 100-i angeordnete Grobversion eines Werkstücks 1-i mit mindestens einer daran ausgebildeten Schleifgrube automatisch 3-dimensional zu vermessen, um Ist-Maßdaten zu erzeugen. Es versteht sich, dass die Vermessungseinrichtung 300 auch dazu eingerichtet sein kann, Ist-Maßdaten von dem Werkstück 1-i in anderen Versionen erzeugen (d.h., das Werkstück 1-i vermessen) kann - beispielsweise bevor Schleifgruben an dem Werkstück 1-i ausgebildet werden, oder nachdem die Schleifgruben 2-i aufgefüllt wurden.

Ebenso wie mit Bezug auf den oder die Roboter 200 bereits beschrieben wurde, kann eine Vermessungseinrichtung 300 für jede Schweißzelle 100-i, für je zwei Schweißzellen 100-i, 100-j (überlappen oder nicht-überlappend), oder noch eine andere Anzahl und/oder Konfiguration von Vermessungseinrichtungen 300 vorgesehen sein. Beispielsweise kann es sich dabei um eine optische Vermessungseinrichtung, welche ein optisches Vermessungsverfahren durchführt, handeln. Beispielsweise kann die Vermessungseinrichtung 300 dazu eingerichtet sein, ein auf Streifen- und/oder Musterprojektion basierendes Verfahren, z.B. ein Laserlichtschnittverfahren, durchzuführen. Andere mögliche optische Vermessungseinrichtungen sind beispielsweise Einrichtungen für eine konfokale Messtechnik, eine Weißlichtinterferometrie, eine Lichtlaufzeitmessung, und/oder eine Stereo-Fotografie. Je nach konkreter Variante kann die Vermessungseinrichtung 300 auch fix an der Schweißzelle 100-i angeordnet sein.

In einer bevorzugten Variante ist in jeden Roboter 200 eine Vermessungseinrichtung 300 integriert, oder jeder Roboter 200 umfasst eine Vermessungseinrichtung 300. Die Vermessungseinrichtung 300 kann jedoch auch als Wechselwerkzeug ausgebildet sein, d.h., dass der Roboter 200 (bzw. jeder Roboter) sich bei Bedarf bzw. nach Ablaufplan an einer Werkzeughalterung eines so genannten "Werkzeugbahnhofs" automatisch mit der Vermessungseinrichtung 300 ausrüsten (oder mit ihr ausgerüstet werden) kann, und diese nach der jeweiligen Vermessung automatisch wieder abgelegt werden kann (z.B. um ein Schneidwerkzeug, Schleifwerkzeug, Schweißwerkzeug etc. auszurüsten).

Die Schweißanlage 1000 weist außerdem eine Datenbank 400 auf, welche dazu eingerichtet ist, zumindest Soll-Maßdaten für das Werkstück 1-i zu speichern. Die Datenbank 400 kann lokal in oder an einer Schweißzelle 100-i angeordnet sein, oder entfernt angeordnet sein, beispielsweise als Cloud-Datenbank realisiert sein. Die Datenbank 400 kann auch weitere Daten speichern, beispielsweise Steuerdaten für den Roboter 200 oder dergleichen. Die Datenbank 400 kann physisch als mehrere separate Datenspeicher realisiert sein.

Wie im Folgenden noch näher erläutert werden wird, kann die Datenbank 400 auch dazu ausgebildet sein, eine Vielzahl von Betriebsparametern, insbesondere Schweißparametern für ein oder mehrere Schweiß-Verfahrensschritte (z.B. Fertigungsschweißen, Auftragschweißen etc.) zu speichern. Die Schweißparameter sind bevorzugt in zwei oder mehr, besonders bevorzugt in drei oder mehr, Parametersätzen gespeichert. Insbesondere kann für mindestens zwei unterschiedliche Lagen der auszufüllenden Schleifgruben 2-i im Raum jeweils ein eigener Parametersatz von Schweißparametern für das Fertigungsschweißen bereitgestellt werden, und das Fertigungsschweißen durch das Schweißwerkzeug 201 unter Verwendung des jeweils zugehörigen Parametersatzes basierend auf der Lage der jeweils auszufüllenden Schleifgrube 2-i im Raum erfolgen.

Die Schweißanlage 1000 umfasst außerdem eine Recheneinrichtung 500, welche dazu eingerichtet ist, automatisch abzufahrende Bewegungsbahnen des das Schweißwerkzeug 201 führenden Roboters 200 basierend auf den erzeugten Ist-Maßdaten sowie auf den gespeicherten Soll-Maßdaten für das Werkstück 1-i zu berechnen. Ist der Roboter 200 dazu ausgelegt, in mehreren Schweißzellen 100-i tätig werden zu können, insbesondere schweißen zu können, so kann die Recheneinrichtung 500 auch dazu ausgelegt sein, automatisch abzufahrende Bewegungsbahnen in den mehreren Schweißzellen 100-i zu erzeugen.

Die Schweißanlage 1000 umfasst außerdem eine Steuereinrichtung 600, welche dazu eingerichtet ist, das Fertigungs-Schweißwerkzeug 201 und den Roboter 200 unter Verwendung der berechneten Bewegungsbahnen zu steuern, die mindestens eine Schleifgrube 2-i mittels Fertigungsschweißen auszufüllen.

Wie im Nachfolgenden insbesondere anhand der möglichen Verfahrensschritte des erfindungsgemäßen Verfahrens noch genauer erläutert werden wird, kann die Schweißanlage 1000 für eine Vielzahl weiterer Funktion eingerichtet sein.

Die Schweißanlage 1000 kann ferner in einigen Ausführungsformen, insbesondere im Zusammenhang mit Schweißzellen 100-i, welche für großformatige Werkstücke 1-i ausgelegt sind, eine Stromschiene 700 aufweisen.

Der Roboter 200 kann einen Stromabnehmer 270 mit einem Schleifkontakt 277 aufweisen, welcher dazu eingerichtet ist, während Bewegungen des Roboters 200 mit der Stromschiene 700 in elektrischem Kontakt zu bleiben, um über die Stromschiene 700 eine elektrische Verbindung zwischen einem elektrischen Pol des Roboters 200 (insbesondere einer Schweißstromquelle 210 des Roboters 200) und dem Werkstück 1-i herzustellen.

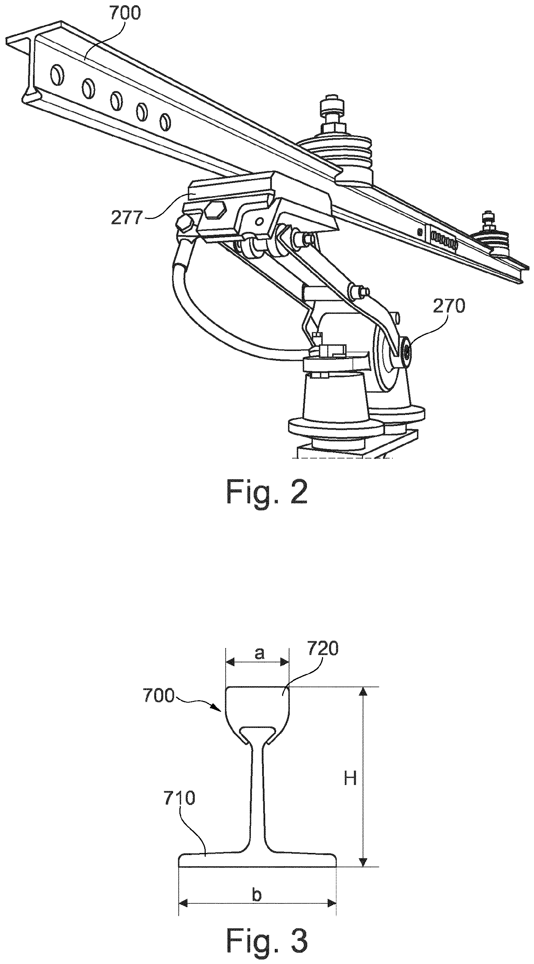

Fig. 2 zeigt eine schematische 3-dimensionale Detailansicht eines Teils der Stromschiene 700 sowie einer möglichen Gestaltungsform des Stromabnehmers 270 mit dem Schleifkontakt 277. Der Roboter 200 ist dabei insbesondere zur Bewegung (zumindest in einer Raumdimension) entlang der Stromschiene 700 ausgebildet, sodass dessen Stromabnehmer 270 sich entlang der Stromschiene 700 und immer im elektrischen Kontakt mit dieser bewegt. Die Stromschiene 700 kann dabei linear ausgebildet sein oder einen Biegeradius aufweisen, beispielsweise von 1000 mm bis 10000 mm, insbesondere von 2000 mm bis 8000 mm, besonders bevorzugt von 3000mm bis 5000 mm.

Der Schleifkontakt 277 kann Schleifkohle, Grauguss, Messing, Bronze, Aluminium (insbesondere Reinaluminium) und/oder Kupfer aufweisen oder daraus bestehen. Der Schleifkontakt 277 kann beispielsweise vorteilhaft aus einer Messing/Bronze-Legierung oder einer Aluminium/Kupfer-Legierung bestehen oder eine solche Legierung aufweisen.

Ein oder mehrere Materialien (insbesondere alle Materialien) aus denen der Schleifkontakt besteht, weisen vorteilhaft eine elektrische Leitfähigkeit von 5 Siemens pro Meter (S/m) oder mehr, bevorzugt von 13 S/m oder mehr, besonders bevorzugt von 28 S/m oder mehr, insbesondere von 33 S/m oder mehr oder 55 S/m oder mehr auf.

Fig. 3 zeigt einen schematischen Querschnitt durch die Stromschiene 700, um ein mögliches, vorteilhaftes Querschnittsprofil der Stromschiene 700 zu illustrieren. Die Stromschiene 700 kann insbesondere als grob T-förmige Stahlschiene realisiert sein, an welcher am Fuß der T-Form ein Kupferkopf 720 angebracht ist, welcher dazu ausgelegt ist, mit dem Schleifkontakt 277 in Kontakt zu kommen, wie in Fig. 2 gezeigt ist. Der Kupferkopf 720 kann vorteilhaft eine Querschnittsfläche von 35 mm² oder mehr aufweisen, insbesondere von 50 mm² oder mehr. Eine Schienenfußbreite b der Stromschiene 700, also die Breite des Querbalkens 710 der T-Form, kann beispielsweise 30 mm oder mehr, insbesondere 45 mm oder mehr betragen.

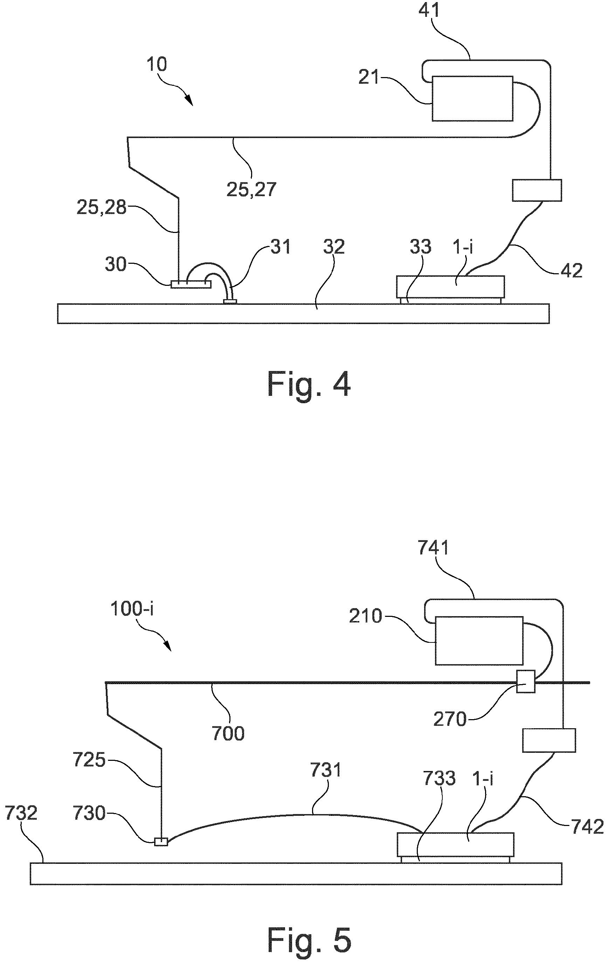

Fig. 4 zeigt eine schematische elektrische Anordnung in einer Schweißzelle 10 nach dem Stand der Technik, und Fig. 5 zeigt eine schematische elektrische Anordnung einer Schweißzelle 100-i einer Schweißanlage 1000 gemäß einer Ausführungsform der vorliegenden Erfindung. Der Roboter selbst ist in beiden Figuren der Übersichtlichkeit halber nicht gezeigt.

Bei der konventionellen Schweißzelle 10 in Fig. 4 ist eine Schweißstromquelle 21 eines Schweißroboters über ein Massekabel 25 elektrisch mit einer kurzen Kupferschiene 30 verbunden, wobei ein erster Teil 27 des Massekabels 25 von dem Schweißroboter mitbewegt wird, und ein zweiter Teil 28 des Massekabels 25 statisch in einem senkrechten Schacht verläuft. Über Leitungen 31 ist die Kupferschiene 30 elektrisch mit einer Bramme 32 verbunden, über welche ein Drehtisch 33 somit elektrisch mit Masse verbunden wird, auf welchem ein Werkstück 1-i platziert wird. Der zweite elektrische Pol wird über ein Zwischenschlauchpaket 41 sowie einen Brennerschlauch 42 zu einem Werkzeug des Roboters zum Bearbeiten des Werkstücks geführt.

Bei dieser Ausführung muss das Massekabel 25, insbesondere bei Schweißzellen für großformatige Werkstücke, sehr lang ausgeführt sein, wobei typische Längen bereits des ersten Teils 27 des Massekabels 25 beispielsweise 15 m oder größer sind, um die Beweglichkeit des Schweißroboters nicht einzuschränken. Hierdurch ergibt sich eine beträchtliche Induktivität, beispielsweise von 40 Mikrohenry oder mehr, sodass beim Schweißen eine störende Blaswirkung entsteht.

Bei der in Fig. 5 gezeigten Schweißzelle 100-i der Schweißanlage 1000 gemäß einer Ausführungsform der vorliegenden Erfindung hingegen ist zumindest der erste Teils des konventionellen Massekabels 25 durch die Stromschiene 700 ersetzt. Ein Massekabel 725, welches die Stromschiene elektrisch kontaktiert kann dabei elektrisch zu einer Kupferschiene 730 führen, von wo aus über Leitungen 731 das Werkstück 1-i elektrisch kontaktiert (und somit auf Masse gelegt werden) kann, sodass ein Lichtbogen zu einem Schweißwerkzeug (z.B. dem Fertigungsschweißwerkzeug 201) ausgebildet werden kann. Auch hierbei kann das Werkstück 1-i auf einem Werkstückträger 733, insbesondere einem Drehtisch, gelagert sein, welcher durch die Steuereinrichtung 600 steuerbar, insbesondere bewegbar (z.B. drehbar), ausgeführt sein kann.

Bei dieser Anordnung verläuft somit der Masseschluss zu dem Werkstück 1-i außerhalb und unabhängig von der Bramme 732, auf der der Werkstückträger 733 angeordnet ist. Dies trägt ebenfalls zur Verringerung bzw. Eliminierung einer Blaswirkung bei. Der Werkstückträger 733 kann dazu eingerichtet sein, das Werkstück 1-i von der Bramme 732 elektrisch zu isolieren.

Vorteilhaft ist die Stromschiene 700 im oberen Bereich der Schweißzelle 100-i angeordnet, insbesondere oberhalb des Werkstückträgers 733, wobei der Körper des Roboters 200 noch weiter oben angeordnet ist, d.h., an der von dem Werkstückträger 733 abgewandten Seite der Stromschiene 700.

Das Massekabel 725 kann dabei insbesondere mittig (oder in einem Bereich von +/-20%, insbesondere +/-10%, um die Mitte herum) bezüglich der (Breite der) Schweißzelle 100-i (oder bezüglich eines Bewegungsradius des Roboters 200) angeordnet sein.

Hierdurch beläuft sich der Beitrag der Stromschiene 700 zur stromführenden Länge der gesamten Masseleitung vom Massepol der Schweißstromquelle 210 bis zum Werkstückträger 733 auf maximal die halbe Breite der Schweißzelle 100-i und damit selbst im Maximalfall (wenn sich der Roboter 200 ganz auf einer Seite, z.B. ganz links/ganz rechts, befindet) weniger als halb so viel wie der - typischerweise in einer Schleppkette geführte - erste Teil 27 des konventionellen Massekabels 25 in Fig. 4. Eine kombinierte stromführende Länge der Masseleitung und der Stromschiene beträgt bevorzugt 12 Meter oder weniger, insbesondere 10 Meter oder weniger, besonders bevorzugt unter 8 Metern. Hierdurch kann die Induktion im Betrieb der Masseleitung deutlich verringert werden, beispielsweise unter 30 Mikrohenry (µH), unter 29 Mikrohenry (µH), unter 25 Mikrohenry (µH) oder, besonders bevorzugt, unter 20 Mikrohenry (µH).

Ist die Stromschiene 700 so ausgeführt, dass sie sich über mehrere Schweißzellen 100-i erstreckt, ändert dies nichts an dem oben Gesagten, da der Strom stets den kürzesten Weg nehmen wird und somit jeweils nur Teilabschnitte der Stromschiene 700 stromdurchflossen sein werden. Gleichzeitig kann durch eine Stromschiene 700, welche sich über zwei oder mehre Schweißzellen 100-i erstreckt, vorteilhaft eine gute Mobilität des Roboters 200 ermöglicht werden, da der Schleifkontakt 277 des Roboters 200 somit auch bei Bewegung zwischen den zwei oder mehr Schweißzellen 100-i somit immer in Kontakt mit der Stromschiene 700 bleibt.

Der zweite elektrische Pol der Schweißstromquelle 210, welche typischerweise mit dem Roboter 200 mitbewegt wird, wird beispielsweise auch in der Ausführungsform gemäß Fig. 5 über ein Zwischenschlauchpaket 741 und einen Brennerschlauch 742 an den Werkstückträger 733 herangeführt.

Wie bereits erläutert wurde, kann der Roboter 200 auch dazu ausgelegt und eingerichtet sein, andere Werkzeuge als das Fertigungsschweißwerkzeug 201 zu führen, zum Beispiel eine Kohlelektrode für ein Kohlelichtbogenfugen und/oder einen Plasmabrenner für ein Plasmafugen.

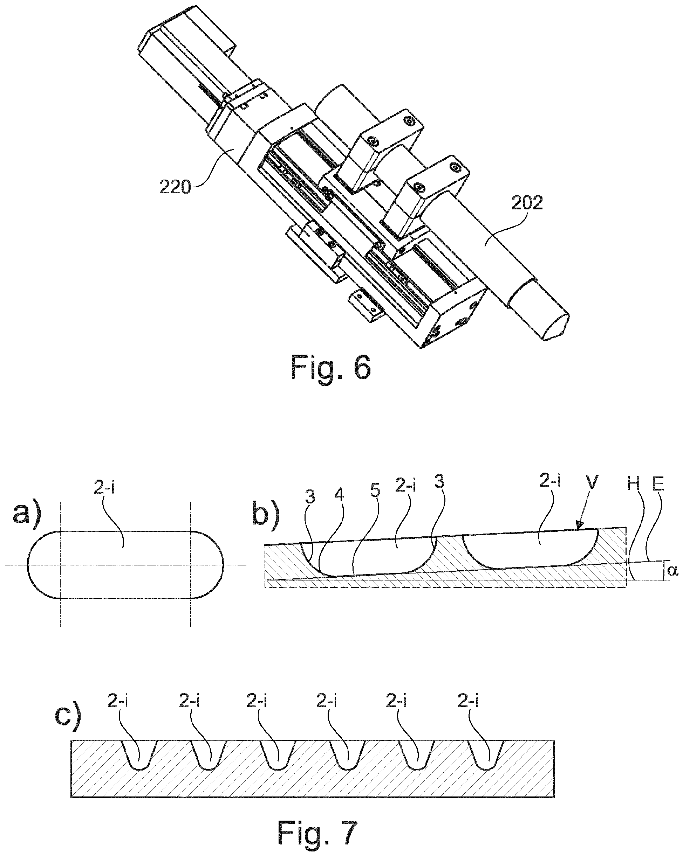

Fig. 6 zeigt eine schematische Darstellung eines Details des Roboters 200 der Schweißanlage 1000 in einer Ausführungsform. Genauer gesagt zeigt Fig. 6 einen linearen Aktuator 220, über welchen ein Plasmabrenner 202 an dem Roboter 200 angeordnet sein kann. Wie bereits erläutert wurde, kann der lineare Aktuator 220 vorteilhaft deutlich schneller (dynamischer) reagieren als der Roboter 200 selbst, insbesondere um eine Abstandsregelung implementieren zu können.

Die Kombination aus dem linearen Aktuator 220 und dem Plasmabrenner 202 (welche auch als Plasmafugeinrichtung bezeichenbar ist) kann als ein Wechselwerkzeug ausgeführt sein, welches durch den Roboter 200, wie auch andere Wechselwerkzeuge, an einer Werkzeughalterung des Werkzeugbahnhofs automatisch ausgerüstet und nach Benutzung dort automatisch wieder abgelegt werden kann.

Beispielsweise kann die Steuereinrichtung 600 ein Lichtbogenspannungs-Bestimmungsmodul aufweisen, welches dazu eingerichtet ist, eine Plasmalichtbogenspannung eines durch den Plasmabrenner 202 ausgebildeten Plasmalichtbogens zu bestimmen. Die Steuereinrichtung 600 kann außerdem ein Abstands-Regelungsmodul aufweisen, welches dazu eingerichtet ist, mit der Plasmalichtbogenspannung als Regelgröße unter Verwendung des linearen Aktuators 220 die bereits beschriebene Abstandsregelung des Plasmabrenner 202 zu dem Werkstück 1-i zu implementieren. Es ist jedoch auch möglich, dass der Roboter 200 den Plasmabrenner 202 direkt führt, ohne dass dazwischen ein linearer Aktuator 220 angeordnet ist, wobei in diesem Fall der Roboter 200 den Plasmabrenner 202 z.B. bei Bedarf greifen und danach wieder in eine Werkzeughalterung des Werkzeugbahnhofs einsetzen kann.

Der Roboter 200 kann somit insbesondere dazu eingerichtet sein, mittels des Plasmabrenners 202 Übermaße an der Grobversion des Werkstücks 1-i abzutragen, insbesondere durch so genanntes Plasmafugen, basierend auf zuvor durch die 3D-Vermessungseinrichtung 300 (insbesondere speziell hierfür) erzeugten Ist-Maßdaten sowie auf den in der Datenbank 400 gespeicherten Soll-Maßdaten. Die Recheneinrichtung 500 kann dazu eingerichtet sein, abzufahrende Plasmafugen-Bewegungsbahnen des Plasmabrenners 202 zum Abtragen von Übermaßen an der Grobversion des Werkstücks 1-i mittels Plasmafugen basierend auf den erzeugten Ist-Maßdaten sowie auf den gespeicherten Soll-Maßdaten automatisch zu berechnen. Die Steuereinrichtung wiederum kann dazu eingerichtet sein, als Teil des Herstellungsverfahrens des Werkstücks 1-i den Roboter 200 zu steuern, das Plasmafugen gemäß der berechneten Plasmafugen-Bewegungsbahnen durchzuführen.

Es versteht sich, dass der Roboter 200 auch zum Ausführen von konventionellen Fugentechnologien ausgebildet sein kann, beispielsweise von Kohlelichtbogen-Fugen, bei dem ein verkupferter Kohlestab als Elektrode verwendet wird. Im Gegensatz dazu hat die hierin gelehrte Verwendung eines Plasmabrenners 202 aber mehrere Vorteile:
- Der Materialabtrag erfolgt berührungslos und nahezu verschleißfrei, sowie kontinuierlich einsatzfähig.
- Es gibt kein Verbrauchsmaterial (wie etwa den Kohlestab).
- Es findet keine Veränderung der Materialzusammensetzung an dem Werkstück 1-i statt, insbesondere kein "Aufkohlen" an der Oberfläche.
- Rauch- und Lärmemissionen werden verringert.

Des weiteren kann der Roboter 200 auch dazu eingerichtet sein, ein Auftragschweißwerkzeug, insbesondere ein Laser-Auftragschweißwerkzeug oder Plasma-Pulver-Auftragschweißwerkzeug, zu führen, um Auftragschweißen, insbesondere Laser-Auftragschweißen oder Plasma-Pulver-Auftragschweißen, an dem Werkstück 1-i (bzw. einer Version des Werkstücks 1-i) durchzuführen.

Der Roboter 200 kann darüber hinaus auch für das Führen aller möglichen anderen Werkzeuge ausgebildet sein, welche für das Bearbeiten eines Werkstücks 1-i, insbesondere einer Grobversion nach einem Stahlguss, verwendbar sind oder verwendet werden. Die Schweißanlage 1000 kann eine Werkzeughalterung aufweisen, von welcher der Roboter 200 benötigte Schweißwerkzeugs 201, 202 entnehmen und in welcher der Roboter 200 Schweißwerkzeuge 201, 202, welche aktuell nicht (mehr) verwendet werden, verstauen kann. Es kann für jeden Roboter 200 eine eigene Werkzeughalterung vorgesehen sein, oder mehrere (z.B. zwei) Roboter 200 können eine gemeinsame Werkzeughalterung verwenden.

In einer weiteren vorteilhaften Option kann der Roboter 200 auch dazu eingerichtet sein, ein Schleifwerkzeug zu führen. Die 3D-Vermessungseinrichtung 300 kann wiederum dazu eingerichtet sein, eine Grobversion des Werkstücks 1-i automatisch 3-dimensional zu vermessen, um vorläufige Ist-Maßdaten zu erzeugen. Die Recheneinrichtung 500 kann dazu eingerichtet sein, basierend auf den erzeugten vorläufigen Ist-Maßdaten sowie auf den gespeicherten Soll-Maßdaten für das Werkstück 1-i abzufahrende Schleif-Bewegungsbahnen des Schleifwerkzeugs automatisch zu berechnen. Die Steuereinrichtung 600 kann dazu eingerichtet sein, den Roboter 200 zu steuern, durch Abfahren der abzufahrenden Schleif-Bewegungsbahnen durch das Schleifwerkzeug mindestens eine Schleifgrube 2-i in der Grobversion des Werkstücks 1-i auszubilden.

Wie im Vorangehenden bereits erläutert wurde, kann der Roboter 200 auch dazu eingerichtet sein, mindestens eine Ungänze an einer Grobversion des Werkstücks 1-i auszumerzen, indem z.B. ein thermisches Schneidwerkzeug (z.B. ein Kohlelichtbogen-Brenner) als ein Wechselwerkzeug automatisch ausgerüstet und entsprechend automatisch berechneter Schneidbahnen automatisch bewegt wird. Durch das Erzeugen der Schleifgruben 2-i können hierdurch entstehende unerwünschte Formen und/oder unerwünschte Materialveränderungen entfernt werden.

Fig. 7a)-c) zeigen beispielhaft Schleifgruben 2-i, wobei Fig. 7a) eine Draufsicht, Fig. 7b) einen Längsschnitt durch zwei Schleifgruben 2-i, und Fig. 7c) einen Querschnitt durch sechs Schleifgruben 2-i darstellt. Es versteht sich, dass die Schleifgruben 2-i im Normalfall nicht derart regelmäßig angeordnet sind, sondern in Abhängigkeit von auftretenden Ungänzen erzeugt werden. Die geometrische Form (oder mehrere geometrische Formen) von Schleifgruben 2-i kann dabei vorgespeichert sein, sodass nur die entsprechenden Dimensionen der Ungänzen erfasst und die Schleifgruben 2-i entsprechend skaliert zu werden brauchen. Dies ermöglicht es auch, dass die in der Datenbank 400 gespeicherten Parametersätze von Schweißparametern spezifisch auf die gespeicherten Formen der Schleifgruben 2-i angepasst sind. Hierbei versteht es sich, dass die Datenbank 400 auch verteilt angeordnet sein kann, sodass beispielsweise die Ist-Maßdaten und die Parametersätze an verschiedenen physischen oder virtuellen Speicherorten gespeichert werden können, die der Datenbank 400 zugerechnet werden können.

Wie insbesondere in Fig. 7b) ersichtlich ist, weisen die Schleifgruben 2-i typischerweise relativ steile Seitenwände 3, eine relativ (oder vollständig) flache Bodenfläche 5, und dazwischen einen Übergangsbereich 4 auf. Die Schweißbedingungen für das Fertigungs-Schweißwerkzeug 201 können sich stark voneinander unterscheiden, je nachdem, wie die auszufüllende Schleifgrube 2-i im Raum ausgerichtet ist, insbesondere mit Bezug auf die Horizontale H. Die Ausrichtung (oder: der Neigungswinkel α) der Schleifgruben 2-i wird dabei im Folgenden vorteilhaft bezüglich ihrer flachen Bodenfläche 5 bestimmt, d.h., bezüglich einer Ebene E, in welcher die jeweilige Bodenfläche 5 angeordnet ist. Fig. 7b) illustriert die Bestimmung des Neigungswinkels α als Winkel zwischen dieser Ebene E und der Horizontalen H.

Alternativ kann auch vorgesehen sein, dass der Neigungswinkel α zwischen der Horizontalen H und einer virtuellen Oberfläche V der jeweiligen Schleifgrube 2-i bestimmt wird, und die Parametersätze entsprechend bestimmt und abgespeichert sind. Die virtuelle Oberfläche V ist diejenige virtuelle Fläche, die durch die äußere Umrandung der Schleifgrube 2-i (in der Außenfläche des Werkstücks 1-i) aufgespannt wird. Typischerweise sind die Ebene E der Bodenfläche 5 und die virtuelle Oberfläche V der Schleifgrube 2-i parallel zueinander, wie dies auch in Fig. 7b) dargestellt ist.

In Fällen, in denen die virtuelle Oberfläche V nicht eben ist, kann als Bezugsebene für den Neigungswinkel α zur Horizontalen H eine virtuelle Ersatz-Ebene bestimmt werden, die der virtuellen Oberfläche V am nächsten oder möglichst nahe kommt, etwa eine Ausgleichsebene nach der Methode der kleinsten Quadrate.

Insbesondere für das Fertigungsschweißen an den Schleifgruben 2-i (aber optional auch jeweils für andere Schweißprozesse) können somit vorteilhaft drei Parametersätze in der Datenbank 400 gespeichert werden:
- ein Vertikal-Parametersatz für den "vertikalen Bereich" von Schleifgruben 2-i in einer Lage etwa im Bereich von α = 60°bis 90° (insbesondere α = 70°bis 90°) zur Horizontalen (d.h. 0° bis 30°, insbesondere 0° bis 20° zum Lot);
- ein Horizontal-Parametersatz für den "horizontalen Bereich", also Schleifgruben 2-i in einer Lage etwa im Bereich von α = 0° bis 10°zur Horizontalen (also 80° bis 90° zum Lot); und
- einen Übergangs-Parametersatz für den Bereich dazwischen, also beispielsweise Schleifgruben 2-i mit Lagen im Bereich von α = 10° bis 70°zur Horizontalen.

Als ein weiteres Beispiel könnten auch nur zwei Parametersätze in der Datenbank 400 gespeichert werden, beispielsweise ein Horizontal-Parametersatz für Schleifgruben 2-i in einer Lage im Bereich von 0° ≤ α ≤ 45° (d.h., α = 0° bis 45°) zur Horizontalen, und einen Vertikal-Parametersatz für Schleifgruben 2-i in einer Lage von 45° < α ≤ 90° (d.h., α größer 45° bis hin zu 90°) zur Horizontalen.

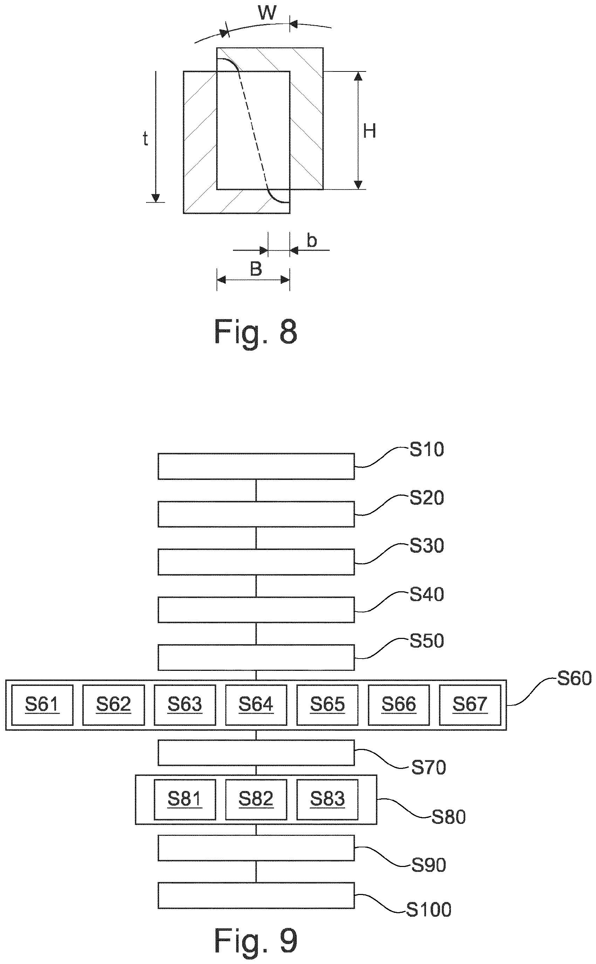

Fig. 8 veranschaulicht mögliche Abmessungen einer Schleifgrube 2-i entsprechend einer möglichen geometrischen Form von Schleifgruben 2-i, wie sie automatisch durch die Recheneinrichtung 500 der Schweißanlage 1000 berechnet werden können.

Eine Fußpunktbreite b beträgt vorteilhaft 20 mm oder mehr, insbesondere 23 mm oder mehr. Eine Grubenbreite B beträgt vorteilhaft 25 mm oder mehr, bevorzugt 30 mm oder mehr, besonders bevorzugt 34 mm oder mehr. Ein Flankenwinkel W beträgt vorteilhaft 20° oder mehr, bevorzugt 25° oder mehr, besonders bevorzugt 29° oder mehr. Eine Höhe H des flachen Abschnitts der Seitenwände 3 ist frei wählbar und ist typischerweise durch eine Fehlertiefe t von Ungänzen in dem Werkstück 1-i bedingt.

Es versteht sich, dass jeder dieser Parametersätze wiederum für verschiedene Schweißsituationen vorliegen kann, also etwa für das Schweißen verschiedener Materialien sowie für das Schweißen mit verschiedenen Schweißwerkzeugen. Hierbei kann zum Beispiel nach dem Material, der Qualität oder dem Legierungsgrad des Materials des Werkstücks 1-i unterschieden werden.

Die nachfolgende Tabelle gibt vorteilhafte Parameter und Parameterbereiche für das Fertigungsschweißen an, jeweils für unlegierte Werkstoffe (d.h. Werkstoffe mit höchstens Kohlenstoff, aber 0% anderen Legierungselementen als Zusatz), niedriglegierte Werkstoffe (d.h. Werkstoffe mit weniger als 5 Massenprozent von Legierungselementen in Summe), und hochlegierte Werkstoffe (d.h. Werkstoffe bei denen mindestens ein Legierungselement über 5 Massenprozent ausmacht), für eine Lage von 20° der auszufüllenden Schleifgrube 2-i bezüglich der Horizontalen.

| **Werkstoff** | **v**_{D} [m/min] | **v**_{H} [mm/s] | **v**_{V} [mm/s] | **Bahnabstand [mm]** | t_{L} [mm] | **Winkel [°]** |
|---|---|---|---|---|---|---|
| unlegiert | 6,2 - 10,0 | 9,5 - 12,6 | 4,0 - 10,0 | 2,3 - 4,0 | >3,5 | 20 |
| niedrig legiert | 6,3 - 10,3 | 9,5 - 17,0 | 3,5 - 12,0 | 2,25 - 4,0 | >3,8 | 20 |
| hochlegiert | 6,2 - 15,50 | 9,2 - 18,3 | 3,2 - 14,0 | 1,5 - 4,348 | >3,5 | 20 |

Hierbei bezeichnet v_{D} eine Drahtvorschubgeschwindigkeit für eine abschmelzende Drahtelektrode, v_{H} eine horizontale Bahngeschwindigkeit der Schweißpistole (bzw. des an der Schweißpistole generierten Lichtbogens) des Fertigungs-Schweißwerkzeugs 201, und v_{V} eine vertikale Bahngeschwindigkeit der Schweißpistole. Der Bahnabstand liegt jeweils zwischen zwei benachbarten Bahnen bzw. Bahnzentren, die das Fertigungs-Schweißwerkzeug 201 abfährt, um die Schleifgruben 2-i vollständig aufzufüllen. Die Lagenstärke t_{L} gibt an, mit welcher Höhe Material pro Bahn durch das Fertigungs-Schweißwerkzeug 201 aufgetragen wird.

Fig. 9 zeigt ein schematisches Flussdiagramm zum Erläutern eines Verfahrens zum Herstellen eines Werkstücks 1-i gemäß einer Ausführungsform der vorliegenden Erfindung. Wie bereits mehrfach erläutert wurde, ist das Verfahren insbesondere in oder mit der erfindungsgemäßen Schweißanlage 1000 verwendbar, aber auch unabhängig davon. Das Verfahren ist demnach gemäß allen beschriebenen Optionen, Varianten, Ausführungsformen und Verfeinerungen der erfindungsgemäßen Schweißanlage 1000 anpassbar und umgekehrt. Insbesondere werden einige Verfahrensschritte im Folgenden beispielhaft anhand von Bestandteilen oder Elementen der erfindungsgemäßen Schweißanlage 1000 näher beschrieben oder erläutert. Dies dient der anschaulicheren Erklärung und muss nicht zwangsläufig bedeuten, dass dieser Verfahrensschritt stets mit diesem Bestandteil oder Element ausgeführt werden muss, obwohl dies stets eine Möglichkeit darstellt.

Im Folgenden wird beispielhaft eine Abfolge von Verfahrensschritten beschrieben, die zum Herstellen des Werkstücks 1-i, teilweise in einer Schweißzelle 100-i, beitragen können. Das Auflisten der Verfahrensschritte bedeutet nicht, dass diese alle benötigt werden, und insbesondere nicht, dass alle gezeigten Verfahrensschritte essentiell sind. Vielmehr versteht es sich, dass je nach gewünschtem Produkt einer oder mehrere Verfahrensschritte ausgelassen, öfter oder seltener durchgeführt, oder ergänzt werden können. Das erfindungsgemäße Verfahren kann somit einen, mehrere, oder alle der aufgezählten Verfahrensschritte aufweisen.

Typischerweise wird zunächst in einem Schritt S10 ein Konzept für das Werkstück angefertigt oder empfangen, insbesondere in Form von 3D-Daten, optional angereichert mit zusätzlichen Werkstück-Spezifikationen (oder: Informationen) wie etwa gewünschten Materialien, einzuhaltenden Toleranzen, und dergleichen mehr. Diese 3D-Daten können als Soll-Maßdaten festgelegt werden und hierfür beispielsweise in einer Datenbank 400 gespeichert werden, wie im Vorangehenden bereits beschrieben wurde.

In einem Schritt S20 wird eine Gussform erzeugt, beispielsweise durch additive oder subtraktive Fertigung.

In einem Schritt S30 wird in einem Stahlguss eine Grobversion des Werkstücks 1-i hergestellt (d.h., die Grobversion gegossen).

In einem Schritt S40 wird die Grobversion der Gussform entnommen, es werden etwaige Speiser entfernt, und eine Wärmebehandlung kann stattfinden.

In einem Schritt S50 wird die Grobversion in eine Schweißzelle 100-i eingebracht, vorteilhaft in eine Schweißzelle 100-i einer Schweißanlage 1000 gemäß der vorliegenden Erfindung.

In einem Schritt S60 findet ein automatisches Fugen des Werkstücks 1-i mittels eines Roboters 200 statt, bevorzugt ein Plasmafugen unter Verwendung eines Plasmabrenners 202, wie im Vorangehenden bereits ausführlich erläutert wurde.

Somit kann das Fugen S60 insbesondere einen, mehrere, oder alle der folgenden Schritte umfassen:
- Automatisches Berechnen S61 von abzufahrenden Plasmafugen-Bewegungsbahnen des Plasmabrenners 202 zum Abtragen von Übermaßen an der Grobversion des Werkstücks 1-i mittels Plasmafugen, basierend auf den erzeugten Ist-Maßdaten sowie auf den gespeicherten Soll-Maßdaten;
- Erzeugen S62 eines Plasma-Lichtbogens durch den Plasmabrenner 202;
- Abschmelzen S63 von Material des Werkstücks 1-i mittels des Plasma-Lichtbogens;
- Wegblasen S64 des abgeschmolzenen Materials, typischerweise mittels einer Gasdüse des Plasmabrenners 202;
- Erfassen S65 einer Plasma-Lichtbogenspannung (oder einer darauf basierenden oder davon abgeleiteten Größe) des erzeugten Plasma-Lichtbogens;
- Regeln S66 des Abstands des Plasmabrenners 202 von dem Werkstück 1-i unter Verwendung der erfassten Plasma-Lichtbogenspannung als Regelgröße, insbesondere durch Steuern S67 eines linearen Aktuators 220, über welchen der Plasmabrenner 202 an dem Roboter 200 angeordnet ist, auf Basis der erfassten Plasma-Lichtbogenspannung(gegebenenfalls zusätzlich, oder gleichzeitig, zum Steuern des Roboters 200).

Das automatische Berechnen S61 der abzufahrenden Plasmafugen-Bewegungsbahnen des Plasmabrenners 202 kann beispielsweise durch die Recheneinrichtung 500 erfolgen, wie im Vorangehenden bereits erläutert wurde. Das Regeln S66 des Abstands kann beispielsweise durch die Steuereinrichtung 600 erfolgen, wie im Vorangehenden ebenfalls bereits erläutert wurde. Das Abfahren der abzufahrenden Plasmafugen-Bewegungsbahnen durch den Plasmabrenner 202 kann somit im Zusammenspiel des Steuerns des Roboters 200 (z.B. durch die Steuereinrichtung 600) sowie des Steuerns S67 eines linearen Aktuators 220 - falls an dem Roboter 200 vorhanden - realisiert werden.

In einem Schritt S70 findet ein automatisches 3-dimensionales Vermessen der Grobversion des Werkstücks 1-i statt, um vorläufige Ist-Maßdaten zu erzeugen. Dies kann beispielsweise durch eine 3D-Vermessungseinrichtung 300, welche beispielsweise von dem Roboter 200 geführt oder in den Roboter 200 integriert sein kann, durchgeführt werden.

Es versteht sich, dass prinzipiell ein automatisches 3-dimensionales Vermessen des Werkstücks 1-i vor und/oder nach jedem Schritt durchgeführt werden kann, in welchem das Werkstück 1-i in irgendeiner Art und Weise bearbeitet wird, um aktuelle Ist-Maßdaten zu erzeugen, und der jeweilige nachfolgende Verfahrensschritt dann vorteilhaft (unter anderem oder sogar ausschließlich) basierend auf den jeweils aktuellen Ist-Maßdaten erfolgen kann. Der einzige Nachteil einer solchen ständigen (Nach-)Vermessung ist deren Zeitaufwand, der somit üblicherweise gegen den Effizienz- und/oder Genauigkeitsgewinn durch die genaueren/aktuelleren Ist-Maßdaten abgewogen werden wird. Je nach dem konkreten Werkstück 1-i und den für verschiedene Verfahrensschritte und damit zusammenhängende mögliche Fehler vorgegebenen Toleranzen kann diese Abwägung sich von Fall zu Fall unterscheiden.

Das automatische 3-dimensionale Vermessen kann außerdem auch zur Inspektion und Qualitätskontrolle dienen.

In einem Schritt S80 wird mindestens eine Ungänze entfernt, und bevorzugt werden sämtliche Ungänzen entfernt. Die Ungänzen können insbesondere anhand eines Vergleichs (z.B. durch die Recheneinrichtung 500) der vorläufigen Ist-Maßdaten mit den Soll-Maßdaten automatisch erkannt werden.

Das Verfahren kann ein Entfernen S81 von Ungänzen mittels eines thermischen Schneidprozesses, z.B. mittels Kohlelichtbogen-Fugens, umfassen.

In einem weiteren optionalen Schritt (insbesondere nach einem etwaigen Entfernen S81 von Ungänzen etwa mittels Kohlelichtbogen-Fugen) kann ein automatisches Berechnen S82 von abzufahrenden Schleif-Bewegungsbahnen mindestens eines Schleifwerkzeugs, bevorzugt basierend auf den erzeugten vorläufigen Ist-Maßdaten sowie auf den gespeicherten Soll-Maßdaten für das Werkstück 1-i erfolgen. Die Schleif-Bewegungsbahnen können insbesondere derart berechnet werden, dass Materialveränderungen, die bei dem Entfernen S81 von Ungänzen aufgetreten sind (z.B. Aufkohlen), entfernt werden. Das Berechnen S82 kann beispielsweise durch die Recheneinrichtung 500 erfolgen, wie im Vorangehenden bereits erläutert wurde.

In einem weiteren Schritt S83 erfolgt ein Ausbilden der mindestens einen Schleifgrube 2-i in der Grobversion des Werkstücks 1-i durch automatisches Abfahren der abzufahrenden Schleif-Bewegungsbahnen durch das mindestens eine Schleifwerkzeug.

Alternativ, oder teilweise zusätzlich, kann das Erzeugen der Schleifgruben 2-i auch durch manuelles Schleifen erfolgen.

In einem Schritt S90 erfolgt ein Fertigungsschweißen, in welchem die mindestens eine Schleifgrube 2-i (bevorzugt alle Schleifgruben 2-i) ausgefüllt werden. Hierzu kann, wie im Vorangehenden bereits ausführlich erläutert wurde, ein Roboter 200 der Schweißanlage 1000 vorteilhaft auf genau an die jeweilige Situation angepasste Schweißparameter zugreifen, welche z.B. in der Datenbank 400 zur Verfügung gestellt sein können.

Das für das Fertigungsschweißen verwendete Fertigungs-Schweißwerkzeug kann insbesondere ein Metallschutzgasschweißwerkzeug (MIG/MAG-Schweißwerkzeug) sein, d.h., das Fertigungsschweißen kann als

Metallschutzgasschweißen durchgeführt werden. Vorteilhaft erfolgt ein automatisches Berechnen S91 von abzufahrenden Bewegungsbahnen des Roboters 200, welcher ein Fertigungs-Schweißwerkzeug 201 führt, basierend auf den jüngsten erzeugten Ist-Maßdaten sowie auf gespeicherten Soll-Maßdaten für das Werkstück 1-i.

Das für das Ausfüllen der Schleifgruben 2-i verwendete Material (sowie ggfs. Zusatzmaterial) kann jeweils auf das Material des Werkstücks 1-i hin angepasst werden.

Daraufhin kann ein automatisches Ausfüllen S92 der mindestens einen Schleifgrube 2-i mittels Fertigungsschweißen erfolgen, wobei der Roboter 200 gemäß den berechneten Bewegungsbahnen gesteuert wird, beispielsweise wie anhand der Steuereinrichtung 600 im Vorangehenden beschrieben wurde.

In einem weiteren Schritt S100 kann mindestens ein automatisches Auftragschweißen, insbesondere ein Laser-Auftragschweißen (engl. laser metal deposition, LMD) und/oder ein Plasma-Pulver-Auftragschweißen (englisch plasma transferred arc, PTA, welding), durchgeführt werden. Hierzu kann vorteilhaft zuvor eine erneute automatische 3D-Vermessung (etwa durch die 3D-Vermessungseinrichtung 300) erfolgen, um aktuelle Ist-Maßdaten zu erzeugen, und das automatische Auftragschweißen S100 kann basierend auf den jüngsten Ist-Maßdaten, den Soll-Maßdaten und/oder den Werkstück-Spezifikationen durchgeführt werden.

In der vorangegangenen detaillierten Beschreibung sind verschiedene Merkmale zur Verbesserung der Stringenz der Darstellung in einem oder mehreren Beispielen zusammengefasst worden. Es versteht sich, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar ersichtlich sein.

### Bezugszeichenliste

- 1-i: Werkstück
- 2-i: Schleifgrube
- 3: Seitenwand
- 4: Übergangsbereich
- 5: Bodenfläche
- 10: Schweißzelle
- 20: Schweißstromquelle
- 25: Massekabel
- 27: erster Teil des Massekabels
- 28: zweiter Teil des Massekabels
- 30: Kupferschiene
- 31: Leitungen
- 32: Bramme
- 33: Drehtisch
- 41: Zwischenschlauchpaket
- 42: Brennerschlauch
- 100-i: Schweißzelle
- 200: Roboter
- 201: Fertigungs-Schweißwerkzeug
- 202: Plasmabrenner
- 210: Schweißstromquelle
- 220: linearer Aktuator
- 270: Stromabnehmer
- 277: Schleifkontakt
- 300: 3D-Vermessungseinrichtung
- 400: Datenbank
- 500: Recheneinrichtung
- 600: Steuereinrichtung
- 700: Stromschiene
- 710: Querbalken
- 720: Kupferkopf
- 725: Massekabel
- 730: Kupferschiene
- 731: Leitung
- 732: Bramme
- 733: Werkstückträger
- 741: Zwischenschlauchpaket
- 742: Brennerschlauch
- 1000: Schweißanlage

- α: Lage der Schleifgrube zur Horizontalen
- E: Ebene der Bodenfläche der Schleifgrube
- H: Horizontale
- S10..S100: Verfahrensschritte
- V: virtuelle Oberfläche der Schleifgrube

## Patentansprüche

1. Verfahren zum Herstellen eines Werkstücks (1-i), umfassend zumindest die Schritte:
Herstellen (S30) einer Grobversion des Werkstücks (1-i) in einem Stahlgussverfahren;
Ausbilden (S83) mindestens einer Schleifgrube (2-i) in der Grobversion des Werkstücks (1-i);
Automatisches 3-dimensionales Vermessen (S70) der hergestellten Grobversion des Werkstücks (1-i) mit der daran ausgebildeten mindestens einen Schleifgrube (2-i), um Ist-Maßdaten zu erzeugen;
Automatisches Berechnen (S91) von abzufahrenden Bewegungsbahnen eines Roboters (200), welcher ein Schweißwerkzeug (201, 202) führt, basierend auf den erzeugten Ist-Maßdaten sowie auf gespeicherten Soll-Maßdaten für das Werkstück (1-i); und
Automatisches Ausfüllen (S90) der mindestens einen Schleifgrube (2-i) mittels Fertigungsschweißen, wobei der Roboter (200) gemäß den berechneten Bewegungsbahnen gesteuert wird.

2. Verfahren nach Anspruch 1,
wobei als Schweißwerkzeug ein Metallschutzgasschweißwerkzeug verwendet wird.

3. Verfahren nach Anspruch 1 oder 2,
ferner umfassend ein automatisches Auftragschweißen (S100) des Werkstücks (1-i) zur Beschichtung oder Konturbildung, insbesondere mittels Laser-Auftragschweißen oder Plasma-Pulver-Auftragschweißen.

4. Verfahren nach einem der Ansprüche 1 bis 3, ferner umfassend:
Automatisches Berechnen (S61) von abzufahrenden Plasmafugen-Bewegungsbahnen eines Plasmabrenners (202) zum Abtragen von Übermaßen an der Grobversion des Werkstücks (1-i) mittels Plasmafugen (S60), basierend auf den erzeugten Ist-Maßdaten sowie auf den gespeicherten Soll-Maßdaten.

5. Verfahren nach Anspruch 4,
wobei der Plasmabrenner (202) über einen linearen Aktuator (220) an dem Roboter (200) angebracht ist, und wobei eine Abstandsregelung des Plasmabrenners (202) zu dem Werkstück (1-i) unter Verwendung des linearen Aktuators (220) implementiert wird.

6. Verfahren nach Anspruch 5, ferner umfassend:
Erzeugen (S62) eines Plasma-Lichtbogens durch den Plasmabrenner (202) zum Plasmafugen des Werkstücks (1-i);
Erfassen (S65) einer Plasma-Lichtbogenspannung des erzeugten Plasma-Lichtbogens; und
Regeln (S66) des Abstands des Plasmabrenners (202) von dem Werkstück (1-i) unter Verwendung der erfassten Plasma-Lichtbogenspannung als Regelgröße.

7. Verfahren nach einem der Ansprüche 4 bis 6,
wobei die durch den Plasmabrenner (202) abzufahrenden Plasmafugen-Bewegungsbahnen durch den Roboter (200) realisiert werden, wobei der Roboter (200) den Plasmabrenner (202) zusätzlich zu einem Fertigungs-Schweißwerkzeug (201) führt oder ein Fertigungs-Schweißwerkzeug (201) und den Plasmabrenner (202) abwechselnd führt.

8. Verfahren nach einem der Ansprüche 1 bis 7, außerdem umfassend:
Automatisches 3-dimensionales Vermessen (S70) der hergestellten Grobversion des Werkstücks (1-i), um vorläufige Ist-Maßdaten zu erzeugen; und
Automatisches Berechnen (S82) von abzufahrenden Schleif-Bewegungsbahnen mindestens eines Schleifwerkzeugs, basierend auf den erzeugten vorläufigen Ist-Maßdaten sowie auf den gespeicherten Soll-Maßdaten für das Werkstück (1-i);
wobei ein Ausbilden (S83) der mindestens einen Schleifgrube (2-i) in der Grobversion des Werkstücks (1-i) durch Abfahren der abzufahrenden Schleif-Bewegungsbahnen durch das mindestens eine Schleifwerkzeug erfolgt.

9. Verfahren nach einem der Ansprüche 1 bis 8,
wobei durch eine Datenbank (400) Schweißparameter bereitgestellt werden, wobei für mindestens zwei unterschiedliche Lagen der auszufüllenden Schleifgruben (2-i) im Raum jeweils ein eigener Parametersatz von Schweißparametern bereitgestellt wird, und
wobei das Fertigungsschweißen durch das Schweißwerkzeug unter Verwendung des jeweils zugehörigen Parametersatzes basierend auf der Lage der jeweils auszufüllenden Schleifgrube (2-i) im Raum erfolgt.

10. Schweißanlage (1000) zum Herstellen eines Werkstücks (1-i), umfassend:
mindestens eine Schweißzelle (100-i);
eine 3D-Vermessungeinrichtung (300), welche dazu eingerichtet ist, eine in der Schweißzelle (100-i) angeordnete Grobversion eines Werkstücks (1-i) mit mindestens einer daran ausgebildeten Schleifgrube (2-i) automatisch 3-dimensional zu vermessen, um Ist-Maßdaten zu erzeugen;
mindestens einen Roboter (200), welcher dazu eingerichtet ist, zumindest ein Schweißwerkzeug (201, 202) zu führen;
eine Datenbank (400), welche dazu eingerichtet ist, Soll-Maßdaten für das Werkstück (1-i) zu speichern;
eine Recheneinrichtung (500), welche dazu eingerichtet ist, automatisch abzufahrende Bewegungsbahnen des das Schweißwerkzeug (201, 202) führenden Roboters (200) basierend auf den erzeugten Ist-Maßdaten sowie auf den gespeicherten Soll-Maßdaten für das Werkstück (1-i) zu berechnen; und
eine Steuereinrichtung (600), welche dazu eingerichtet ist, das Schweißwerkzeug (201, 202) und den Roboter (200) unter Verwendung der berechneten Bewegungsbahnen zu steuern, die mindestens eine Schleifgrube (2-i) mittels Fertigungsschweißen auszufüllen.

11. Schweißanlage (1000) nach Anspruch 10,
ferner umfassend einen Plasmabrenner (202) zum Abtragen von Übermaßen an der Grobversion des Werkstücks (1-i) mittels Plasmafugen,
wobei die Steuereinrichtung (600) dazu eingerichtet ist, den Plasmabrenner basierend auf den erzeugten Ist-Maßdaten sowie auf den gespeicherten Soll-Maßdaten zu steuern.

12. Schweißanlage (1000) nach Anspruch 11,
wobei der Plasmabrenner (202) über einen linearen Aktuator (220) an dem Roboter (200) anbringbar oder angebracht ist, und
wobei die Steuereinrichtung (600) dazu eingerichtet ist, eine Abstandsregelung des Plasmabrenners (202) zu dem Werkstück (1-i) unter Verwendung des linearen Aktuators (220) zu implementieren.

13. Schweißanlage (1000) nach einem der Ansprüche 10 bis 12, ferner umfassend ein Auftragschweißwerkzeug, insbesondere ein Laser-Auftragschweißwerkzeug oder ein Plasma-Pulver-Auftragschweißwerkzeug, welches an dem Roboter (200) angebracht oder anbringbar ist.

14. Schweißanlage (1000) nach einem der Ansprüche 10 bis 13, ferner umfassend eine Stromschiene (700),
wobei der Roboter einen Stromabnehmer (270) mit einem Schleifkontakt (277) aufweist, welcher dazu eingerichtet ist, während Bewegungen des Roboters (200) mit der
Stromschiene (700) in elektrischem Kontakt zu bleiben, um über die Stromschiene (700) eine elektrische Verbindung zwischen einem elektrischen Pol des Roboters (200) und dem Werkstück (1-i) herzustellen, insbesondere eine Masseverbindung.

15. Schweißanlage (1000) nach Anspruch 14,
wobei das Werkstück (1-i) in der Schweißzelle (100-i) mittels einer Masseleitung (725, 730, 731) elektrisch mit der Stromschiene (700) verbunden oder verbindbar ist, und
wobei eine kombinierte stromführende Länge der Masseleitung (725, 730, 731) und der Stromschiene (700) 12 Meter oder weniger, insbesondere 10 Meter oder weniger, beträgt.
